# EUROPÄISCHE PATENTSCHRIFT

(11) **EP 1 108 335 B1**
(45) Veröffentlichungstag und Bekanntmachung des Hinweises auf die Patenterteilung: **20.10.2004**
(21) Anmeldenummer: 99967843.6
(22) Anmeldetag: 25.08.1999
(51) Int. Cl.: H04Q 3/00

(54) **SIGNALISIERUNGSSYSTEM EINES SIGNALISIERUNGSPUNKTES**
SIGNALLING SYSTEM OF A SIGNALLING POINT
SYSTEME DE SIGNALISATION D'UN POINT DE SIGNALISATION

(30) Priorität: 25.08.1998 EP 98116018
(43) Veröffentlichungstag der Anmeldung: 20.06.2001
(73) Patentinhaber: SIEMENS AKTIENGESELLSCHAFT, 80333 München (DE)
(72) Erfinder: GRADISCHNIG, Klaus, David, D-82131 Gauting (DE)
(86) Internationale Anmeldenummer: PCT/EP1999/006239
(87) Internationale Veröffentlichungsnummer: WO 2000/011883

(56) Entgegenhaltungen:
- WO-A-97/11563
- US-A- 5 481 673
- GOLDBERG R R ET AL: "COMMON CHANNEL SIGNALING INTERFACE FOR LOCAL EXCHANGE CARRIER TO INTEREXCHANGE CARRIER INTERCONNECTION" IEEE COMMUNICATIONS MAGAZINE, Bd. 28, Nr. 7, 1. Juli 1990 (1990-07-01), Seiten 64-71, XP000140259
- MURPHY B P ET AL: "INTERCONNECTING SIGNALING NETWORKS" PROCEEDINGS OF THE NATIONAL COMMUNICATIONS FORUM, Bd. 43, Nr. 1, 2. Oktober 1989 (1989-10-02), Seiten 495-498, XP000220410
- KUHNERT H -P ET AL: "UEBERWACHUNGS- UND MANAGEMENTSYSTEM FUER NETZE MIT DEM ZEICHENGABESYSTEM NR. 7" NTZ NACHRICHTENTECHNISCHE ZEITSCHRIFT, Bd. 49, Nr. 2, 1. Februar 1996 (1996-02-01), Seiten 10-15, XP000555849

## Beschreibung

Bei kanalbezogenen Zeichengabesystemen, z.B. im Zeichengabesystem R5, ist es möglich, daß ein Zeichengabepunkt über eine Nutzkanalschleife mit sich selbst kommuniziert bzw. eine Verbindung aufbaut. In dem Zeichengabesystem Nr.7 (im folgenden kurz ZGS7) ist dies nicht möglich. Solche Schleifen sind jedoch für das Lösen von mehreren Problemen von Vorteil. Für das Interworking von unterschiedlichen Zeichengabesystemen ist es eine wesentliche Vereinfachung in der Implementierung, wenn alle Zeichengabesysteme mit einem ausgezeichneten Zeichengabesystem interworken, und nicht jedes mit jedem. Ein anderes technisches Problem, welches mit ähnlichen Methoden gelöst werden kann, ist das Incoming Linkset/DPC Screening (siehe z.B. Q.705, §8).

Im ZGS7 wird ein Zeichengabepunkt durch eine Adresse, den sogenannten Signallingpointcode (SPC) identifiziert. Wird der Signallingpointcode als Zieladresse verwendet, wird er auch als Destination Point Code (DPC) bezeichnet. Bezeichnet er eine Ursprungsadresse, wird er Origination Point Code (OPC) genannt. Die Ebene 3 des Nachrichtentransferteils kann im allgemeinen keine Nachricht an den eigenen Signallingpointcode absenden bzw. keine Nachricht von sich selbst empfangen. Auch gewisse Anwender des Nachrichtentransferteils, z.B. TUP und ISUP, könnten normalerweise keine kanalbezogenen Nachrichten an sich selbst senden, selbst wenn dies der Nachrichtentransferteil ermöglichen würde. Um solche Schleifen dennoch zu ermöglichen, sind spezielle Verfahren implementiert worden, die im wesentlichen darin bestehen, daß spezielle Zeichengabekanäle Schleifen bilden, auf denen Zielund/oder Absenderadresse invertiert/komplimentiert werden. Für Anwender müssen ggf. ähnliche, anwenderspezifische Modifikationen durchgeführt werden.

Eine weitere mögliche Lösung für dieses Problem, in Systemen, welche das weiter unten erläuterte Multiple-Network-Konzept unterstützen, wären sogenannte physikalische Netzwerktunnel. Zur Realisierung eines solchen physikalischen Tunnels wird ein Link (sg. Schleifen-Link) in einer Schleife von einem Signalisierungspunkt zu demselben Signalisierungspunkt zurückgeführt und es werden ihm aus- und eingangsseitig zwei unterschiedliche Netzwerk-Identitäten zugeordnet.

Physikalische Tunnel haben allerdings den Nachteil, daß ihre Anwendung zusätzliche Hardware (Schleifen-Links, etc) erfordert, und Nachrichten, welche durch die Tunnel müssen, eine zusätzliche Verzögerung erfahren.

Der Erfindung liegt die Aufgabe zugrunde, ein System anzugeben, das Netzwerktunnel ohne die genannten Nachteile ermöglicht. Die Veröffentlichung US-A-5 481 673 beschreibt bereits ein Signalisierungs-system bzw. Verfahren gemäß dem Oberbegriff von Anspruch 1 bzw. 6.

Diese Aufgabe wird durch ein System gemäß Anspruch 1 und einem Verfahren gemäß Anspruch 6 gelöst.

Das erfindungsgemäße Konzept des virtuellen Tunnels reduziert zusätzlichen Hardwareaufwand und Zeitverzögerung beträchtlich, ohne jedoch einen großen Entwicklungsaufwand zu erfordern.

Im folgenden wird die Erfindung mithilfe der Zeichnung näher erläutert, wobei die Zeichnung drei Figuren umfaßt.

Die Erfindung wird anhand des Systems ZGS7 näher erläutert. In dem ZGS7 wird ein Netzwerk durch einen sogenannten (externen) Network Indicator (NI), welcher in den extern beobachtbaren Nachrichten enthalten ist, gekennzeichnet. Für den NI sind in den Nachrichten 2 Bit reserviert, es können also bis zu 4 Netzwerke in einem Knoten unterschieden werden. Da normalerweise ein Signalisierungslink nur einem Netzwerk angehört, hat sich jedoch die Erkenntnis durchgesetzt, daß es zur Unterscheidung des Netzwerkes genügt, einzelne Links bestimmten Netzwerken zuzuordnen. Der NI wird also nicht mehr als Unterscheidungsmerkmal benötigt. In der Tat gibt es Systeme oder es sind solche in Planung, die mehr als vier (z.B. 8 oder 32) Signalisierungsnetzwerke unterstützen. Dabei wird jedem Signalisierungslink intern eine Netzwerkidentität NID (Netzkennung) und jeder internen Netzwerkkennung NID extern ein NI zugeordnet. Dabei können Netzwerke mit unterschiedlicher interner Identität durchaus denselben externen NI benutzen. Jedes (interne) Netzwerk ist dabei intern vollkommen von den anderen Netzwerken getrennt. (Diese Methode der Entkoppelung von externer NI und interner NID ist natürlich auch auf System anwendbar, die nur vier oder weniger MTP Netzwerke unterstützen.) Das genannte Konzept wird im folgenden als Multiple-Network-Konzept bezeichnet.

Bestehende bzw. geplante Systeme, die das Multiple-Network-Konzept unterstützen routen MSUs normalerweise dadurch, daß aus einer Tabelle (Routingtabelle) der.nächste, aktuell zu verwendende Link(set) zu dem gewünschten Ziel bestimmt wird. Dabei gibt es für jedes interne (logische) Netzwerk genau eine Tabelle und die Tabellen dieser Netzwerke sind voneinander unabhängig. Für diese Systeme wird nun eine einfache Modifikation dieser Routingtabellen dahingehend durchgeführt, daß in den Routingtabellen der als nächstes zu nehmende Weg nicht nur ein bestimmter Link(set) sondern auch ein anderes Netzwerk sein kann.

Als Ausführungsbeispiel der Erfindung sei ein Multiple-Network-System herangezogen, das 32 MTP Netze unterstützt.

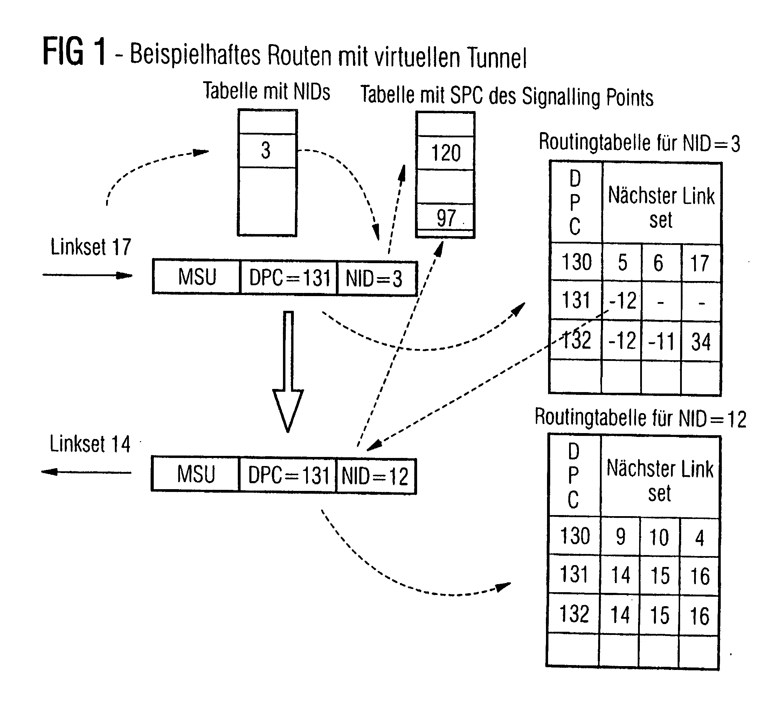

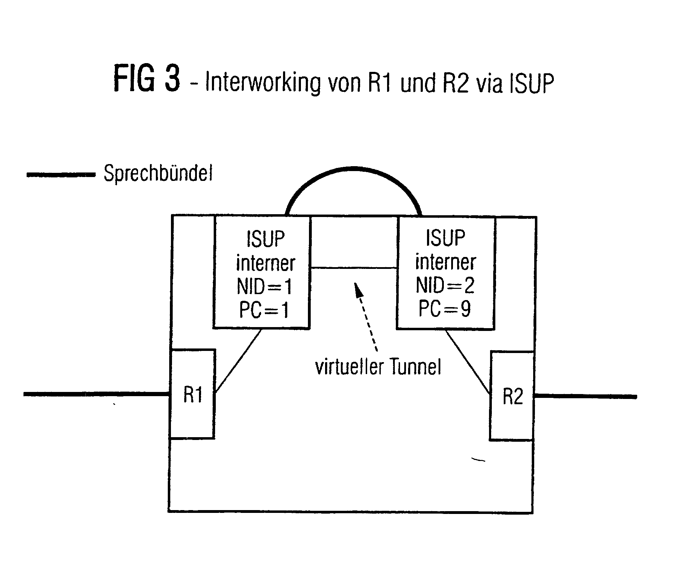

Bei ankommenden MSU stellt das System aufgrund des Links, auf dem die MSU ankam, die (interne) Netzwerkidentität (NID) des Netzes zu dem dieser Link gehört, fest. In Fig. 1 ist dieser Vorgang für eine MSU mit DPC=131 dargestellt, welche auf einem zum Linkset 17 gehörenden Link empfangen wird. Als interne NID wird in Fig. 3 NID=3 festgestellt. Als nächstes stellt es anhand des DPCs der MSU fest, ob der SP für die MSU den Endpunkt darstellt, d.h. ob der SPC des SPs (SPC hängt vom NID ab, in Fig. 1 ist der zu NID=3 gehörende SPC=120 !) mit dem DPC der MSU übereinstimmt oder die MSU weitergeroutet werden muß.

Stellt das System auf die genannte Weise fest, daß die MSU weitergeroutet werden muß, so wählt das System aus einer der NID zugehörigen Routing-Tabelle eine Zeile anhand des DPC der MSU aus. Diese Zeile enthält die Identitäten (z.B. Nummern) der möglichen weiteren Routen (d.h. Linksets) und speziell ausgezeichnete Identitäten (z.B. die Nummern -1 bis -32), die nun nicht Linksets sondern (die z.B. negativen) interne NID darstellen. Wird beim Routen solch eine "Route" erkannt (in Fig. 1 wird durch den Eintrag -12 in der Routingtabelle des NID=3 für den DPC 131 als nächster Weg der "Tunnel" zum Netz mit der NID=12 bestimmt), wird die NID der MSU entsprechend geändert und erneut dem Routing, diesmal aber im andern Netz zugeführt, was bedeutet, daß das System erneut anhand des DPCs der MSU feststellt, ob der SP für die MSU den Endpunkt darstellt und wenn nicht aus einer der NID zugehörigen Routing-Tabelle Informationen zum Routing der MSU entnimmt(siehe Fig. 1: der zu NID=12 gehörende SPC ist 97 und der nächste Weg der MSU führt über Linkset 14). Netzwerkmanagement-Nachrichten werden natürlich auch entsprechend geroutet.

Mit Ausnahme der Erzeugung von Testverkehr und tatsächlicher physikalischer Schleifen können mit virtuellen Tunneln alle Probleme gelöst werden, welche auch mit den physikalischen Tunnel gelöst werden können.

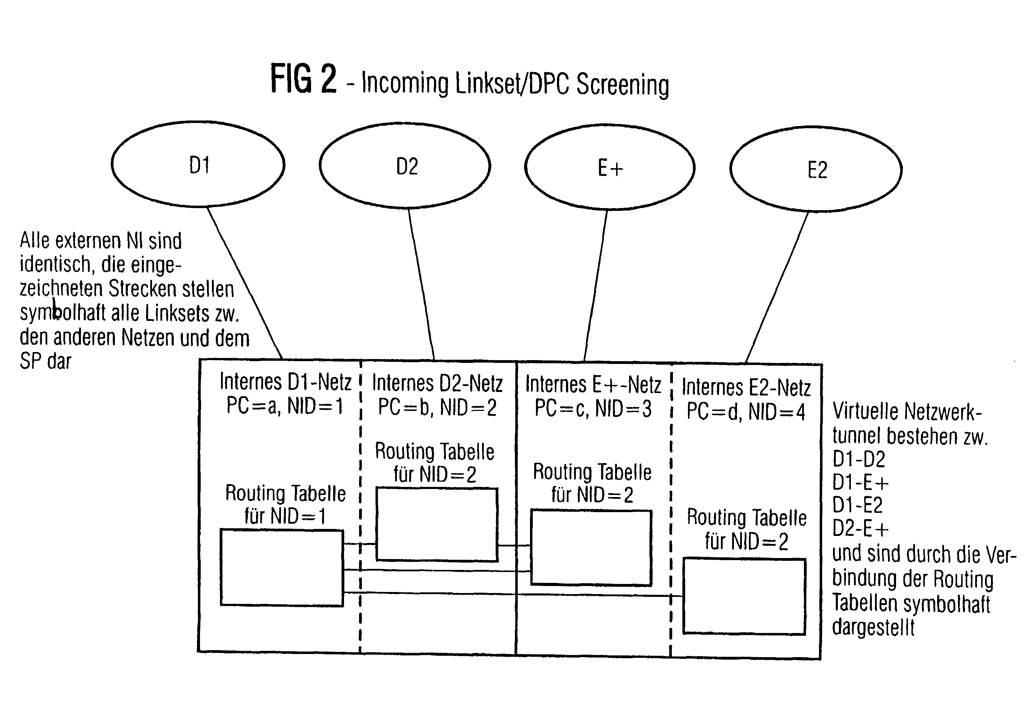

In Fig. 2 wird beispielhaft gezeigt, wie mit der vorliegenden Erfindung gewisse praktisch wichtige Ausprägungen des sog. Incoming Linkset/DPC Screening gelöst werden können. Der Betreiber eines Signalling Transfer Points (STP) bietet anderen Kommunikationsnetzbetreibern SS7 Interconnect Dienste an. In dem Beispiel in Fig. 2 sind dies die Netze D1, D2, E+ und E2. Vertragsmäßig dürfen die anderen Netze den STP uneingeschränkt für SS7 Verkehr innerhalb ihrer eigenen Netze verwenden. Für Verkehr zwischen den Netzen gibt es jedoch folgende Einschränkungen: E+ und D2 dürfen nur untereinander und mit D1 kommunizieren. E2 darf nur mit D1 kommunizieren. Um diese Verträge auch durchzusetzen, muß der Betreiber des STP in der Lage sein, nicht autorisierten Verkehr zw. den Netzen zu unterbinden. Dies kann er dadurch lösen, daß er die Linksets zu den unterschiedlichen Betreibern intern in unterschiedlichen SS7 Netzen terminiert, wie in Fig. 1 symbolhaft dargestellt. Die internen Netze werden dann wie in Fig. symbolhaft dargestellt, durch virtuelle Tunnel verbunden und zwar derart, daß nur zwischen solchen Netzen, zwischen denen Verkehr erlaubt ist, virtuelle Tunnel eingerichtet werden. Dabei werden z.B. für Ziele (DPC) welche zum Betreiber E2 gehören, in den Routingtabellen für die internen Netze 2 und 3 (entsprechend D2 und E+) keine Routen eingerichtet. Hingegen werden z.B. in den Routingtabellen der internen Netze 2, 3 und 4 für Ziele (DPC) in D1 spezielle, die virtuellen Tunnel darstellenden Routen eingerichtet.

Zu bemerken ist, daß die Einschränkung des erlaubten Verkehrs sich nicht unbedingt nur auf gesamte Netze beschränken muß. Vielmehr können die Routingtabellen derart gestaltet werden, daß z.B. Verkehr aus E+ nur zu bestimmten, ausgezeichneten Zielen in D2 möglich ist, indem für nicht erlaubte Ziele in D2 keine Einträge in der Routingtabelle im Netz 3 gemacht werden.

In Fig. 3 ist beispielhaft ein Interworking von verschiedenen Signalisierungssystemen (R1, R2, ISUP) beschrieben. Zwischen R1 und ISUP sowie zwischen R2 und ISUP ist ein Interworking realisiert, nicht aber zwischen R1 und R2. Sowohl im internen Netz mit NID=1 als auch in dem mit NID=2 befindet sich ein ISUP. Extern verwenden beide Netze z.B. denselben NI, aber unterschiedliche Pointcodes.

Ein Ruf zwischen R1 und R2 wird über die ISUP Schleife geleitet. Dazu genügt es, die ZGS7 Routingtabellen in beiden Netzen, sowie die Routingtabellen für das Callprozessing entsprechend einzurichten und die nötigen Sprechbündel für die ISUP-Schleife zu bewerkstelligen. Die ISUPs der beiden internen Netze kommunizieren über den symbolhaft dargestellten virtuellen Tunnel zwischen NID=1 und NID=2. Eine physikalisch geschleifter Signalisierungslink ist also nicht notwendig.

Ein großer Vorteil der Erfindung besteht darin, daß existierende Mechanismen (Routingtabellen und "multiple networks") durch geringen Aufwand für das Bereitstellen von rein virtuellen Netzwerktunneln, welche bisher nur physikalisch realisiert wurden, herangezogen werden können.

Die Erfindung kann auch zur Anwendung kommen, ohne daß das "multiple network" Konzept unterstützt wird, doch werden dann die durch das Tunnelkonzept lösbaren Anwendungs-Probleme eingeschränkt. Wird z. B. die flexible Zuordnung der externen NIs zu den internen NIDs nicht unterstützt, sondern findet diese 1:1 statt, so kann das beschriebene Verfahren nicht für das Incoming Linkset/DPC Screening verwendet werden. Je weniger interne NIDs bei ansonsten flexiblem Mapping von NI zu NID unterstützt werden, desto eingeschränkter wird das Incoming Linkset/DPC Screening in seiner Flexibilität.

## Patentansprüche

1. Signalisierungssystem eines Signalisierungspunktes, das Mittel enthält, welche
- zu einer empfangenen Signalisierungsnachricht anhand einer Netzkennung (NID, NI) die Identität des Netzes, zu der die Signalisierungsnachricht gehört, ermittelt, **dadurch gekennzeichnet, daß** das System Mittel enthält, welche:
- aus einer der Netzidentität zugehörigen. Routing-Tabelle Informationen zum Routing der Signalisierungsnachricht entnimmt, wobei es auf die Routing-Tabelle mittels des Signallingpointcodes (DPC) der Signalisierungsnachricht zugreift,
- anhand der Art der aus der Routing-Tabelle entnommenen Routing-Information feststellt, ob es sich um eine Routinginformation handelt, die einen für die Weiterleitung der Signalisierungsnachricht zu verwendenden Link bzw. Linkset angibt oder eine Netzkennung bedeutet,
- die Signalisierungsnachricht erneut dem Routing zuführt, wenn es sich bei der aus der Routing-Tabelle entnommenen Routing-Information um eine Netzkennung handelt.

2. Signalisierungssystem nach Anspruch 1,
**dadurch gekennzeichnet, daß**
die genannte Netzkennung einer Signalisierungsnachricht durch den Link bzw. Linkset, über den die Signalisierungsnachricht empfangen wurde, festgelegt ist.

3. Signalisierungssystem nach Anspruch 1,
**dadurch gekennzeichnet, daß**
die genannte Netzkennung einer Signalisierungsnachricht in der Signalisierungsnachricht selbst angegeben ist.

4. Signalisierungs-System nach einem der Ansprüche 1 bis 3,
**dadurch gekennzeichnet, daß**
das System so ausgestaltet, daß es mithilfe des genannten erneuten Routings Signalisierungsnachrichten zwischen zwei unterschiedlichen Signalisierungs-Systemen vermittelt.

5. Signalisierungs-System nach einem der Ansprüche 1 bis 3,
**dadurch gekennzeichnet, daß**
das System so ausgestaltet, daß es mithilfe des genannten erneuten Routings ein Internetworking mit anderen Netzen realisiert.

6. Verfahren zum Routing, demgemäß
- zu einer empfangenen Signalisierungsnachricht anhand einer Netzkennung (NID, NI) die Identität des Netzes, zu der die Signalisierungsnachricht gehört, ermittelt wird, **dadurch gekennzeichnet, daß**
- aus einer der Netzidentität zugehörigen Routing-Tabelle Informationen zum Routing der Signalisierungsnachricht entnommen werden, wobei auf die Routing-Tabelle mittels des Signallingpointcodes (DPC) der Signalisierungsnachricht zugegriffen wird,
- anhand der Art der aus der Routing-Tabelle entnommenen Routing-Information festgestellt wird, ob es sich um eine Routing-Information handelt, die einen für die Weiterleitung der Signalisierungsnachricht zu verwendenden Link bzw. Linkset angibt oder eine Netzkennung bedeutet,
- die Signalisierungsnachricht erneut dem Routing zugeführt wird, wenn es sich bei der aus der Routing-Tabelle entnommenen Routing-Information um eine Netzkennung handelt.

7. Verfahren zum Routing nach Anspruch 6,
**dadurch gekennzeichnet, daß**
die Netzkennung einer Signalisierungsnachricht durch den Link bzw. Linkset, über den die Signalisierungsnachricht empfangen wurde, festgelegt wird.

8. Verfahren zum Routing nach Anspruch 6,
**dadurch gekennzeichnet, daß**
die Netzkennung einer Signalisierungsnachricht in der Signalisierungsnachricht selbst angegeben wird.

9. Verfahren nach einem der Ansprüche 6 bis 8,
**dadurch gekennzeichnet, daß**
das genannte erneute Routing verwendet wird, um Signalisierungsnachrichten zwischen zwei unterschiedlichen Signalisierungs-Systemen zu vermitteln.

10. Verfahren nach einem der Ansprüche 6 bis 8,
**dadurch gekennzeichnet, daß**
das genannte erneute Routing verwendet wird, um einem Netz ein erwünschtes Internetworking mit anderen Netzen zu ermöglichen.

## Claims

1. Signalling system of a signalling point, containing means which,
- for a received signalling message, determines the identity of the network to which said signalling message belongs, on the basis of a network ID (NID, NI),
**characterized in that** the system contains means which
- gathers information from a routing table pertaining to the network identity for routing of the signalling message, whereby the system accesses the routing table by means of the signalling point code (DPC) of the signalling message,
- determines, on the basis of the type of routing information gathered from the routing table, whether the routing information specifies a link or linkset to be used for forwarding the signalling message, or signifies a network ID,
- feed the signalling message to the routing process again if the routing information obtained from the routing table is a network ID.

2. Signalling system according to Claim 1,
**characterized in that**
the aforementioned network ID of a signalling message is defined by the link or linkset via which the signalling message was received.

3. Signalling system according to Claim 1,
**characterized in that**
the aforementioned network ID of a signalling message is specified within the actual signalling message.

4. Signalling system according to one of Claims 1 to 3,
**characterized in that**
the system is equipped such that signalling messages are switched between two different signalling systems by means of the aforementioned repeated routing process.

5. Signalling system according to one of Claims 1 to 3,
**characterized in that**
the system is equipped such that internetworking with other networks is implemented by means of the aforementioned repeated routing process.

6. Method for routing, according to which
- for a received signalling message, the identity of the network to which said signalling message belongs is determined on the basis of a network ID (NID, NI),
**characterized in that**
- information for routing of the signalling message is gathered from a routing table pertaining to the network identity, whereby the routing table is accessed by means of the signalling point code (DPC) of the signalling message,
- it is determined, on the basis of the type of routing information gathered from the routing table, whether the routing information specifies a link or linkset to be used for forwarding the signalling message, or signifies a network ID,
- the signalling message is fed again to the routing process if the routing information obtained from the routing table is a network ID.

7. Method for routing according to Claim 6,
**characterized in that**
the network ID of a signalling message is defined by the link or linkset via which the signalling message was received.

8. Method for routing according to Claim 6,
**characterized in that**
the network ID of a signalling message is specified within the actual signalling message.

9. Method according to one of Claims 6 to 8,
**characterized in that**
the aforementioned repeated routing process is used to switch signalling messages between two different signalling systems.

10. Method according to one of Claims 6 to 8,
**characterized in that**
the aforementioned repeated routing process is used to enable a network to internetwork with other networks as required.

## Revendications

1. Système de signalisation d'un point de signalisation comprenant des moyens
- qui déterminent, pour un message de signalisation reçu, à l'aide d'un indicatif du réseau (NID, NI), l'identité du réseau dont fait partie le message de signalisation
**caractérisé par le fait**
**que** le système comprend des moyens
- qui extraient d'un tableau de routage correspondant à l'identité du réseau des informations destinées au routage du message de signalisation, le système accédant au tableau de routage au moyen du code du point de signalisation (DPC) du message de signalisation,
- qui constatent, à l'aide du genre de l'information de routage extraite du tableau de routage, s'il s'agit d'une information de routage indiquant un lien ou un jeu de liens à utiliser pour la retransmission du message de signalisation ou d'une information de routage constituant un indicatif de réseau,
- qui réinjecte le message de signalisation dans le routage si l'information de routage extraite du tableau de routage est un indicatif de réseau.

2. Système de signalisation selon la revendication 1
**caractérisé par le fait**
**que** ledit indicatif de réseau d'un message de signalisation est fixé par le lien ou par le jeu de liens par l'intermédiaire duquel le message de signalisation a été reçu.

3. Système de signalisation selon la revendication 1
**caractérisé par le fait**
**que** ledit indicatif de réseau d'un message de signalisation est indiqué dans le message de signalisation lui-même.

4. Système de signalisation selon l'une des revendications 1 à 3
**caractérisé par le fait**
**que** le système est conçu de telle manière qu'il commute, à l'aide de ladite répétition du routage, des messages de signalisation entre deux systèmes de signalisation différents.

5. Système de signalisation selon l'une des revendications 1 à 3
**caractérisé par le fait**
**que** le système est conçu de telle manière qu'il réalise, à l'aide de ladite répétition du routage, un mécanisme Internet avec d'autres réseaux.

6. Procédé de routage selon lequel
- pour un message de signalisation reçu, l'identité du réseau dont fait partie le message de signalisation est déterminée à l'aide d'un indicatif de réseau (NID, NI),
**caractérisé par le fait**
**que**
- des informations destinées au routage du message de signalisation sont extraites d'un tableau de routage correspondant à l'identité du réseau, l'accès au tableau de routage se faisant au moyen du code du point de signalisation (DPC) du message de signalisation,
- **qu'**on constate, à l'aide du genre de l'information de routage extraite du tableau de routage, s'il s'agit d'une information de routage indiquant un lien ou un jeu de liens à utiliser pour la retransmission du message de signalisation ou d'une information de routage constituant un indicatif de réseau,
- **que** le message de signalisation est réinjecté dans le routage si l'information de routage extraite du tableau de routage est un indicatif de réseau.

7. Procédé de routage selon la revendication 6
**caractérisé par le fait**
**que** l'indicatif de réseau d'un message de signalisation est fixé par le lien ou par le jeu de liens par l'intermédiaire duquel le message de signalisation a été reçu.

8. Procédé de routage selon la revendication 6
**caractérisé par le fait**
**que** l'indicatif de réseau d'un message de signalisation est indiqué dans le message de signalisation lui-même.

9. Procédé de routage selon l'une des revendications 6 à 8
**caractérisé par le fait**
**que** ladite répétition du routage est utilisée pour commuter des messages de signalisation entre deux systèmes de signalisation différents.

10. Procédé de routage selon l'une des revendications 6 à 8
**caractérisé par le fait**
**que** ladite répétition du routage est utilisée pour permettre à un réseau de réaliser un mécanisme Internet voulu avec d'autres réseaux.
